(19) Europäisches Patentamt

European Patent Office

Office européen des brevets

(11) EP 4 672 028 A1

(12) EUROPEAN PATENT APPLICATION

(43) Date of publication:
31.12.2025 Bulletin 2026/01

(21) Application number: 24184127.9

(22) Date of filing: 24.06.2024

(51) International Patent Classification (IPC):
G06F 16/35 (2025.01)   G06Q 10/107 (2023.01)

(52) Cooperative Patent Classification (CPC):
G06F 16/35; G06Q 10/107

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Adacta AG
96450 Coburg (DE)

(72) Inventor: Bautista, Erik
Coburg (DE)

(74) Representative: Gillespie, Richard
Inventorship
Suite 10050
5 Fitzwilliam Square
Dublin 2, D02 R744 (IE)

(54) A SYSTEM AND METHOD FOR SEARCHING FOR AN EMAIL IN A CORPUS OF EMAILS

(57) The present disclosure is directed towards improving the speed and reducing the power consumption of a search for an attachment in a corpus of emails. The system provides a computer-implemented method of storing an email to facilitate its retrieval. The method comprises: processing at least one of the subject line of an email, the body of the email, or a file name of one or more attachments to the email with a first LLM to determine a first score for the email indicative of how likely a user is to search for the email; and storing the email based on the first score, whereby: an email which is more likely to be searched for is stored such that it more easily retrieved than an email that is not likely to be searched for.

FIG. 1

EP 4 672 028 A1

## Description

Field

The present application is directed towards improving the speed and reducing the power consumption of a search for an attachment in a corpus of emails.

Background

More and more, users of email systems have large corpuses of emails. Finding a particular email in such corpus is challenging. This is especially the case because of the sheer volume of emails a typically user will receive.

An additional problem comes from the fact that the content that a user may be searching for may not be present in an email and may instead be in an attachment to an email. At present, searching for this content requires that, for each email with an attachment, the attachment needs to be downloaded. In addition, each attachment then must be passed through an optical character reader (OCR) to extract its content. Only then can this content be searched. To date, the processing time of handling attachments in this way has proven prohibitive, particularly as a user may have over 10,000 emails with attachments. As such, common keyword search tools have difficulty finding relevant email or attachment content for a given search as such search tools are typically swamped by the volume of emails and return many irrelevant files that are of no interest to a user, as through sheer volume, a large number of irrelevant emails may contain any keyword a user selects for a search.

There are known attempts to classify emails using artificial intelligence (AI), and in particular large language models (LLMs). However, a technical problem arises when converting all attachments in a corpus of emails into text to be fed into an LLM. In particular, this conversion significantly increases the volume of text provided to the LLM, which increases the number of tokens, and in turn increases the processing power and time.

As a result, there is at present no practicable way to search such content.

Summary

The present disclosure is directed towards a computer-implemented method of storing an email to facilitate its retrieval, comprising: processing at least one of the subject line of an email, the body of the email, or a file name of one or more attachments to the email with a first LLM to determine a first score for the email indicative of how likely a user is to search for the email; and storing the email based on the first score, whereby: an email which is more likely to be searched for is stored such that it more easily retrieved than an email that is not likely to be searched for. Preferably, the first LLM comprises a probabilistic classifier.

Preferably, if the first score is above a predetermined threshold processing, with a second LLM, at least a portion of text extracted from an attachment to determine a second for the email indicative of how likely a user is to search for the email; and storing the email based on the first and second score, whereby: an email which is more likely to be searched for is stored such that it more easily retrieved than an email that is not likely to be searched for.

Preferably, the second LLM is configured to determine a category for an email based on the information provided to the second LLM.

Preferably, a sorting means is configured to store an email in a folder in a filing system based on the category assigned to the email by the second LLM, whereby the email is automatically stored in the most appropriate folder based on its contents.

Preferably, the method comprises extracting text from an attachment wherein extract text comprises: downloading an attachment provided with the email; and using OCR to extract text from the attachment.

Preferably, the method comprises the removal of stop words.

Preferably, the outer layer of at least one LLM is replaced with a classification layer.

Preferably, the method comprises using a third LLM to generate a vectorised database. More preferably, the vectorised database is used for retrieving an email based on a query to the database.

The disclosure is also directed towards a data processing system comprising means for carrying out the above method.

The disclosure is also directed towards a computer program comprising instructions which, when the program is executed by a computer, cause the computer to carry out the above method.

The disclosure is also directed towards a computer-readable medium comprising instructions which, when executed by a computer, cause the computer to carry out the above method.

The disclosure is also directed towards a data carrier signal carrying the above computer program.

Brief Description of the Drawings

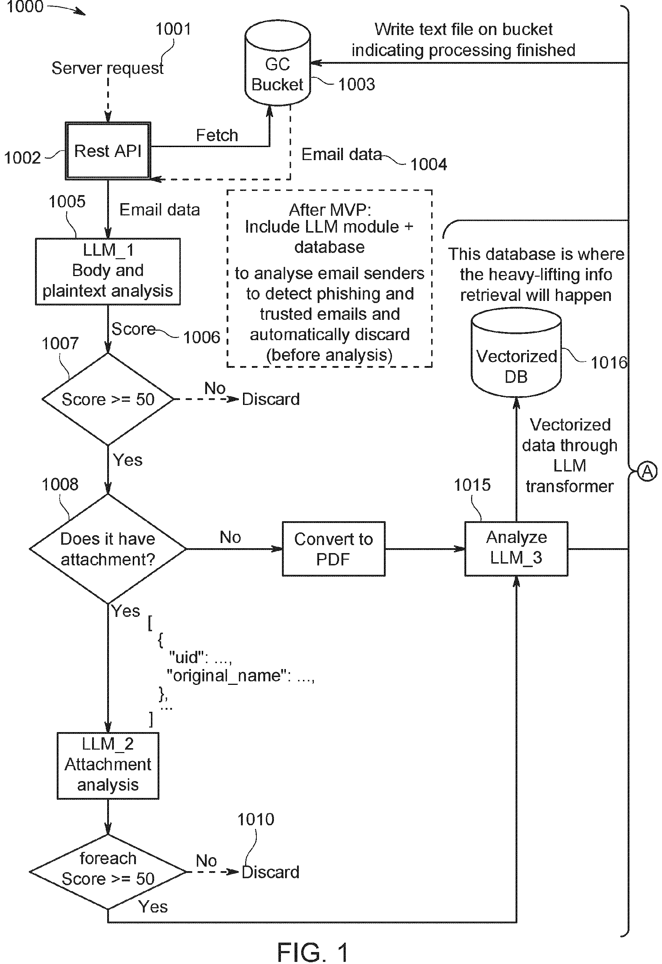

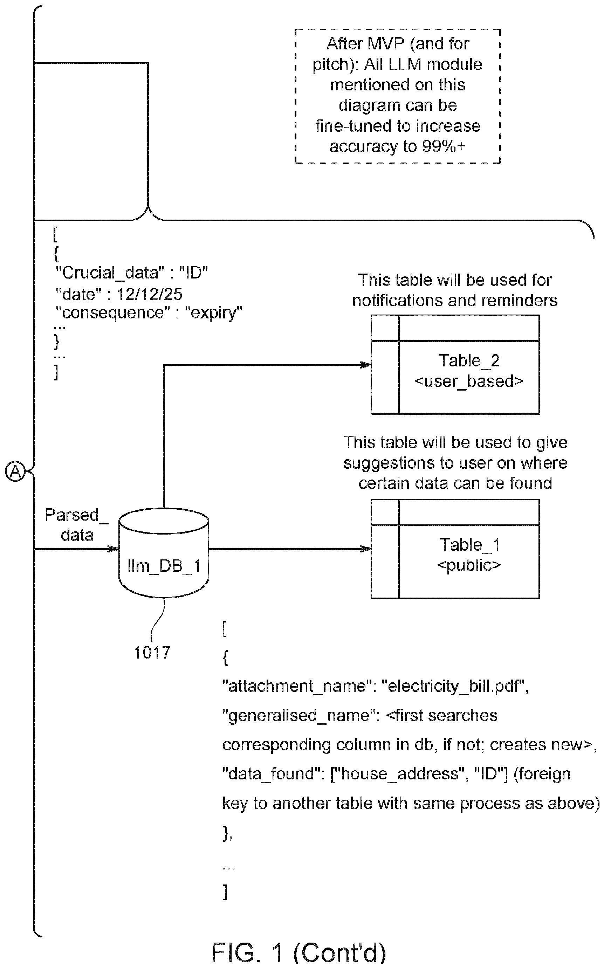

The invention will be more clearly understood from the following description of an embodiment thereof, given by way of example only, with reference to the accompanying drawings, in which:-
Figure 1 shows an overview of a system in accordance with the present disclosure.

Detailed Description

As noted above, the present application is directed towards improving the speed and reducing the power consumption of a search for an attachment in a corpus of emails. The disclosure is based on the realisation that improving the quality of data provided to a vector database of an LLM will speed up fetching data and reduce minimise or eliminate search errors.

It is also based on the realisation that a user is likely to only search for a small number of emails and attachments within the corpus of emails. Indeed, only 5-20% of a user's emails might be relevant for a search.

A method in accordance with the present disclosure comprises at least three separate sages. Each of these stages comprises the use of an LLM. In the first stage, a first LLM is configured to identify emails that a user is likely to search for in the future. Preferably in a preliminary step, one or more of the subject line of an email, the body of the email, and a file name of one or more attachments to the email are processed to remove stop-words.

Stop-words are the words in a stop list (which may also be referred to as a negative dictionary) which are filtered out (i.e. stopped) before or after processing of natural language data (such as e.g. text) because they are deemed insignificant. In search engine optimisation (SEO) terminology, stop-words are the most common words that many search engines used to avoid for the purposes of saving space and time in processing of large data during indexing. In a system according to the present disclosure, a plurality of stop lists are preferably used. In particular, as well as storing a first stop list for a first language, at least a second stop list for a second language is also stored. Preferably a stop list is stored with an identifier that identifies the language of the stop list. For example, the first stop list is stored with a first identification, wherein the first identification identifies the first language and the second stop list is stored with a second identification, wherein the second identification identifies the second language.

To remove stop-words, a language used in the email and the attachment is determined. The determined language is the most likely language to have been used. The determination may be performed using any suitable language detection means. Once a language has been determined, the language is matched to an identifier. The stop list associated with the matched identifier is then selected and used.

Preferably, unformatted characters may also be removed. Unformatted characters are characters without any character encoding. For example, textual characters, as inputted through text entry interface. By removing unformatted characters, characters irrelevant to a future search of the content of the email and attachment (such as e.g. markup language, source code, shell scripts, etc.) can be removed.

In addition, hyperlinks are preferably cleared. In particular, tracking information can be removed from a link without changing the informational content of the link.

As a result, the text can be reduced to a low number of tokens which can be processed very quickly by the first LLM. As a result, the first LLM is able to quickly assess a score for an email (which is referred to in this disclosure as an email score). The email score is a metric indicative of how likely a user is to search for the content of the email and its attachments. For example, the email score could be a score of 0 to 100, where an email score 0 is indicative that a user will never search for the content of that email.

The first LLM is preferably biased towards classifying emails as relevant for a future search. As a result, the number of false negatives is reduced at the cost of producing more false positives. However, this results in minimizing the risk of an email an attachment that a user potential could search for being filtered out at this stage.

Any email having an email score indicative that the likelihood of a user searching for the content of the email and its attachment is above a predetermined threshold is passed to the second stage of the method.

In the second stage, an email's attachment is analysed. In particular, if an email with an attachment is passed to the second stage, the attachment is downloaded. Preferably, the size of the attachment is determined prior to the attachment being downloaded. More preferably, a cap is set for file size in case of malicious intents - in particular, if the size of the file for an attachment is above a predetermined threshold, the file is not downloaded. One an attachment has been downloaded, it is passed through an OCR. Any suitable OCR may be used. As a result, the text content of the attachment can be extracted.

The resultant text extracted from the attachment is processed to remove stop-words. This can be done in the same way as described above. I.e. the language used in the attachment is determined. The determined language is the most likely language to have been used. The determination may be performed using any suitable language detection means. Once a language has been determined, the language is matched to an identifier. The stop list associated with the matched identifier is then selected and used.

Preferably, unformatted characters may also be removed. Unformatted characters are characters without any character encoding. For example, textual characters, as inputted through text entry interface. By removing unformatted characters, characters irrelevant to a future search of the content of the email and attachment (such as e.g. markup language, source code, shell scripts, etc.) can be removed.

In addition, hyperlinks are preferably cleared. In particular, tracking information can be removed from a link without changing the informational content of the link.

As a result, the number of tokens in the text can be reduced to increase processing speed.

The processed text from the attachment is then provided to a second LLM. The second LLM is configured to provide a score for an attachment (which is referred to in this disclosure as an attachment score). The attachment score is a metric for an attachment indicative of how likely a user is to search for the content the attachment. For example, the attachment score could be a score of 0 to 100, where an attachment score of 0 is indicative that a user will never search for the content of that attachment.

If the attachment score for an attachment is above a predetermined threshold, the attachment is passed to the third stage. For example, an attachment having an attachment score greater than or equal to 50 may be passed to the third stage.

The third stage uses a third LLM to generate a vectorised database. The vectorised database is used for information retrieval. In particular, the LLM is used to generate a search index for the data extracted from emails such that the data may be interrogated.

Preferably, the third LLM is also used to generate an LLM database. In particular the third LLM may be trained to extract time sensitive data and use it to generate a record which can be used to generate notifications to a user. For example, the notification may be a reminder about a deadline for a task. The LLM may also generate a prompt table, which can be used to assist the user by providing auto-complete suggestions for queries.

Preferably, the first LLM comprises a probabilistic classifier. In particular, a classification head is added on top of the pre-trained model. The classification head comprises a plurality of multiple fully connected transformers interleaved with activation functions. The classification head is configured to take the final hidden states of the pre-trained model as an input and map them to a binary output. This binary output can be used as a score which is indicative of the likelihood that a user will search for an email.

Mathematically, the classification head can be expressed as a series of transformations:

$$h_1 = f_1(W_1 x + b_1)$$

$$h_2 = f_2(W_2 h_1 + b_2)$$

$$\ldots$$

$$h_m = f_m(W_m h_{m-1} + b_m)$$

where x is the final hidden state of the model, $W_i$ and $b_i$, are the weight matrices and bias vectors of the i-th fully connected layer, respectively, and $f_i$ is the activation function applied after each layer.

Preferably, the output from the last fully connected layer in the classification head is passed to the output layer, which consists of a single neuron. The output of this neuron goes through a sigmoid activation function to produce a probability value between 0 and 1, indicating the likelihood of a user searching for the email.

Mathematically, the output layer and sigmoid activation can be expressed as:

$$p(y=1|x) = \sigma(W_0 h_m + b_0)$$

where $h_m$ is the output from the last fully connected layer, $W_0$ and $b_0$ are the weight vector and bias scalar of the output layer, respectively, and $\sigma$ is the sigmoid function

Preferably, at least the first LLM, the second LLM, or both are based on a base AI-model, such as e.g. "Mistral". As noted above, the outer layer of the first LLM (and preferably the second LLM) is replaced with a classification layer. The use of a classification layer provides a probabilistic output, without losing the advantages provided by an LLM for understanding text. The modified AI engine can be trained using LoRa, quantisation, or preferably both. LoRA refers to Low-Rank Adaptation. LoRA reduces the number of trainable parameters by learning pairs of rankdecomposition matrices while freezing the original weights. This significantly reduces the storage requirement for large language models adapted to specific tasks and enables efficient task-switching during deployment all without introducing inference latency. LoRA also outperforms several other adaptation methods including adapter, prefix-tuning, and fine-tuning.

In addition, depending on the use-case of the application, examples of 'bad' emails can be extracted or generated and stored in the training database. In this disclosure a 'bad' email is one which a user is unlikely to wish to search for. For example, if a user has moved an email to a spam folder the user is unlikely to wish to search for the email. In addition, if the body of email is a known phishing attack, a user is unlikely to wish to search for that email. In this case a 'bad' email can be stored as training data with a score indicative of a user having no interest in its retrieval. For example, it may be stored with a score of '0'.

Training inputs may also be generated using one or more of the LLMs. In particular, the text on a website may be queried with a first training LLM. The query may be, for example, 'list examples of phishing attacks on this site'. Another training LLM can be used to provide a score to the prompts obtained by the first training LLM. A third training LLM can be used to obtain examples of emails which a user is likely to search e.g. by using the search history of a user in an email platform.

In this way relevant information can be extracted and used to fine tune at least one of the first, second or third LLMs. Preferably, at least one of these LLMs is fine-tuned at least once a month. More preferably, at least one of these LLMs is fine-tuned at least once a week. Similarly, the training data is preferably updated at least once a month. More preferably, the training data is preferably updated at least once a week. As a result, the LLMS will be configured to identify the which emails a user is likely to search for.

During the fine-tuning, the parameters of the classification head and output layer are trained using binary cross-entropy loss, which measures the discrepancy between the predicted probabilities and the true labels. The loss function is defined as:

$$\mathcal{L} = -\frac{1}{N} \sum_{i=1}^{N} [y_i \log p(y_i = 1|x_i) + (1 - y_i) \log(1 - p(y_i = 1|x_i))]$$

where $N$ is the number of training examples, $y_i$ is the true label of the i-th prompt, and $p(y_i = 1/x_i)$ is the predicted probability of the $i$-th prompt being malicious.

Preferably, at least one of the LLMs are fine-tuned for their specific purpose. As a result, the accuracy and performance of the LLM is improved. The arrangement of multiple LLMs decreases the size of the LLMs that need to be used allowing for the use of lightweight LLMs.

In addition a preliminary LLM may be used to determine a score based on the domain of the email sender and the corresponding DNS record(s) or scraped HTML or both, wherein the score is indicative of the probability that the email is a phishing attack or malicious. Preferably, an email black list may be stored to avoid an LLM being provided with malicious data, thereby reducing the risk of an injection attack in later use.

A system 1000 in accordance with the present disclosure is shown in figure 1. A shown in figure 1, the system receives a request 1001 at an interface (such as an API) 1002. The interface 1002 is connected to a storage medium 1003 for storing emails. The interface retrieves information 1004 relating to an email in the storage medium 1003. This information 1004 preferably comprises at least one of the email's subject line, the body of the email, or the file name of at least one attachment to the email.

The information 1004 is provided to a first LLM 1005. The first LLM determines 1007 a score 1006 for the information, wherein the score is indicative of how likely a user is to search for that email. If the score is below a predetermined threshold, it is unlikely that a user wishes to search for, or retrieve, the information for that email is not processed any further. If the score is above a predetermined threshold, the email proceeds to the next stage.

Next, it is determined 1008 if the email has an attachment. If the email does not have an attachment, the email information is passed to a third LLM 1015.

If email has an attachment, the text from the attachment is extracted and the text is passed to a second LLM 1009. The second LLM 1009 is configured to determine a second score for the attachment. The second score is indicative of how likely a user is to search for the attachment. If the second score is below a predetermined threshold, it is unlikely that a user wishes to search for, or retrieve, the attachment. In this case processing of the attachment is discontinued 1010. If the second score is above a predetermined threshold, the text of the attachment is provided with the email information to a third LLM 1015.

The third LLM 1015 is used to vectorise the data that has been provided to it so that this data it may be more easily queried using an LLM. In particular, vectorised data is provided to a vectorised database 1016. Parsed data may be provided to an LLM database 1017.

Once the email has been processed, information indicating that the email has been processed may be provided to the storage means to be stored with the email.

Further - to facilitate the retrieval of information, the second LLM can be used to classify emails. For example, if a user has set up a number of different email folders in their email package, the second LLM can be trained using previously stored emails to assign a category an email based on the folders. This automates moving an email to the appropriate folder.

**Claims**

1.  A computer-implemented method of storing an email to facilitate its retrieval, comprising:

    processing at least one of the subject line of an email, the body of the email, or a file name of one or more attachments to the email with a first LLM to determine a first score for the email indicative of how likely a user is to search for the email; and
    storing the email based on the first score, whereby:
    an email which is more likely to be searched for is stored such that it more easily retrieved than an email that is not likely to be searched for.

2.  Preferably, the first LLM comprises a probabilistic classifier.

3.  The method of claim 1 or 2, further comprising:

    if the first score is above a predetermined threshold processing, with a second LLM, at least a portion of text extracted from an attachment to determine a second for the email indicative of how likely a user is to search for the email; and
    storing the email based on the first and second score, whereby:
    an email which is more likely to be searched for is stored such that it more easily retrieved than an email that is not likely to be searched for.

4.  The method of claim 3, wherein the second LLM is configured to determine a category for an email based on the information provided to the second LLM.

5.  The method of claim 3, comprising a sorting means, wherein the sorting means is configured to store an email in a folder in a filing system based on the category assigned to the email by the second LLM, whereby the email is automatically stored in the most appropriate folder based on its contents.

6.  The method of any of claims 3-5, comprising extracting text from an attachment wherein extract text comprises:

    downloading an attachment provided with the email; and
    using OCR to extract text from the attachment.

7.  The method of any preceding claim, comprising the removal of stop words.

8.  The method of any preceding claim, wherein the outer layer of at least one LLM is replaced with a classification layer.

9.  The method of any preceding claim, comprising using a third LLM to generate a vectorised database.

10. The method of claim 9, wherein the vectorised database is used for retrieving an email based on a query to the database.

11. A data processing system comprising means for carrying out the method of any preceding claim.

12. A computer program comprising instructions which, when the program is executed by a computer, cause the computer to carry out a method according to any one of claims 1 - 10.

13. A computer-readable medium comprising instructions which, when executed by a computer, cause the computer to carry out the method of any one of claims 1-10.

14. A data carrier signal carrying the computer program of claim 13.

1000

1001

Server request

GC Bucket 1003

Write text file on bucket
indicating processing finished

Fetch

1002 — Rest API

Email data 1004

1005

Email data

LLM_1
Body and
plaintext analysis

After MVP:
Include LLM module +
database
to analyse email senders
to detect phishing and
trusted emails and
automatically discard
(before analysis)

This database is where
the heavy-lifting info
retrieval will happen

Score 1006

1007

Score >= 50

No → Discard

Vectorized
DB

1016

Yes

1008

Does it have
attachment?

No

Convert to
PDF

Analyze
LLM_3

Vectorized
data through
LLM
transformer

1015

Ⓐ

Yes

```
[
  {
    "uid": ...,
    "original_name": ...,
  },
  ...
]
```

LLM_2
Attachment
analysis

1010

foreach
Score >= 50

No → Discard

Yes

FIG. 1

After MVP (and for pitch): All LLM module mentioned on this diagram can be fine-tuned to increase accuracy to 99%+

```
[
{
"Crucial_data" : "ID"
"date" : 12/12/25
"consequence" : "expiry"
...
}
...
]
```

This table will be used for notifications and reminders

Table_2
<user_based>

This table will be used to give suggestions to user on where certain data can be found

Table_1
<public>

Parsed_data

llm_DB_1

1017

```
[
{
"attachment_name": "electricity_bill.pdf",
"generalised_name": <first searches
corresponding column in db, if not; creates new>,
"data_found": ["house_address", "ID"] (foreign
key to another table with same process as above)
},
...
]
```

(A)

FIG. 1 (Cont'd)

Europäisches
Patentamt

European
Patent Office

Office européen
des brevets

# EUROPEAN SEARCH REPORT

**Application Number**

EP 24 18 4127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/054132 A1 (ABERDEEN DOUGLAS [CH] ET AL) 1 March 2012 (2012-03-01) <br> * abstract * <br> * paragraphs [0006] - [0009], [0086] - [0089], [0105] - [0113]; figures 6A,6B * <br> ----- | 1-14 | INV. <br> G06F16/35 <br> G06Q10/107 |
| X | WO 2008/061096 A2 (MAIL CORP C [US]; SOOD MANISH CHANDER [US] ET AL.) 22 May 2008 (2008-05-22) <br> * abstract * <br> * section "Summary of the Invention" * <br> * page 25, line 9 - page 27, line 22 * <br> ----- | 1-14 | |
| A | US 2018/374171 A1 (AIZEN JONATHAN [US] ET AL) 27 December 2018 (2018-12-27) <br> * abstract * <br> * paragraphs [0042] - [0049] * <br> ----- | 1-14 | |

| | TECHNICAL FIELDS SEARCHED (IPC) |
|---|---|
| | G06F <br> G06Q |

The present search report has been drawn up for all claims

| Place of search | Date of completion of the search | Examiner |
|---|---|---|
| Berlin | 5 November 2024 | Siódmok, Wojciech |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 672 028 A1**

## ANNEX TO THE EUROPEAN SEARCH REPORT
## ON EUROPEAN PATENT APPLICATION NO.

EP 24 18 4127

05-11-2024

| Patent document cited in search report | Publication date | Patent family member(s) | | Publication date |
|---|---|---|---|---|
| US 2012054132 A1 | 01-03-2012 | US | 2012054132 A1 | 01-03-2012 |
| | | US | 2012054642 A1 | 01-03-2012 |
| WO 2008061096 A2 | 22-05-2008 | NONE | | |
| US 2018374171 A1 | 27-12-2018 | AU | 2018289531 A1 | 16-01-2020 |
| | | US | 2018374171 A1 | 27-12-2018 |
| | | US | 2021287314 A1 | 16-09-2021 |
| | | WO | 2018237053 A1 | 27-12-2018 |

EPO FORM P0459